# EUROPEAN PATENT SPECIFICATION

(11) **EP 1 249 086 B1**
(45) Date of publication and mention of the grant of the patent: **23.09.2009**
(21) Application number: 00989567.3
(22) Date of filing: 29.12.2000
(51) Int. Cl.: H04B 10/155

(54) **PRE-DISTORTER WITH NON-MAGNETIC COMPONENTS FOR A NON-LINEAR DEVICE**
VORVERZERRER MIT NICHT-MAGNETISCHEN KOMPONENTEN FÜR EINE NICHT-LINEARE VORRICHTUNG
DISPOSITIF DE PREDISTORSION COMPORTANT DES ELEMENTS NON MAGNETIQUES POUR DISPOSITIF NON LINEAIRE

(30) Priority: 06.01.2000 US 479298
(43) Date of publication of application: 16.10.2002
(73) Proprietor: BROADBAND ROYALTY CORPORATION, Wilmington, DE 19801 (US)
(72) Inventor: CHIAPPETTA, Joseph, F., Shelton, CT 06484 (US); GURUSAMI, Aravan, Wallingford, CT 06492 (US)
(74) Representative: Whiting, Gary
(86) International application number: PCT/US2000/035540
(87) International publication number: WO 2001/050643

(56) References cited:
- EP-A- 0 475 376
- WO-A-98/52304
- US-A- 5 282 072
- US-A- 5 327 279

## Description

### Cross Reference to Related Applications

This application is related to commonly assigned, co-pending US application serial no. 09/478,644, (Attorney Docket No. 100.127US01) (the '127 Application), entitled "DYNAMIC DISTORTION CONTROL," and filed on 6 January 2000.

### Technical Field of the Invention

The present invention relates generally to the field of telecommunication and in particular, to electronic pre-distortion.

### Background

Due to the increased demand for higher capacity in voice, data and video transmission the communications market is expanding. In particular, optical fiber communications technology has been developing in response to the market requirements. Optical transmitters are one type of fiber communications technology that is evolving to meet the increased demand.

Optical transmitters that utilize (electronic) pre-distortion devices for distortion cancellation are well known. Typically, these transmitters are designed around a Mach-Zehnder optical modulator. The modulator is fed from a high power laser. The laser operates in the cool white mode and provides the "light source" that has its intensity or amplitude modulated in the Mach-Zehnder device.

The optical modulation is accomplished by feeding a radio frequency (RF) modulating signal to the appropriate port of the modulator. In this way RF amplitude modulation is converted to optical amplitude modulation.

A detrimental characteristic of the optical modulator is that its optical output/RF input transfer characteristic is very non-linear; it is sinusoidal in nature. Consequently for a large modulation index (the ratio of the peak variation actually used to the maximum design variation, i.e. that variation whereby the instantaneous amplitude of the modulator carrier reaches zero) severe odd order distortion is generated. In order to overcome this distortion, an external means is required to compensate for the non-linear transfer function.

Pre-distorters have been used in the past to minimize odd order distortions generated in the modulator. These odd order distortions are reduced by a circuit that generates its own RF distortions and then injects them into the modulator out of phase with those that are generated by the modulator. The pre-distorters have been limited in their operating bandwidth and in their absolute distortion cancellation due to the use of magnetic components necessary to achieve the phase inversions that are critical to the operation of the device.

For the reasons stated above, and for other reasons stated below which will become apparent to those skilled in the art upon reading and understanding the present specification, there is a need in the art for improved systems and methods that perform distortion cancellation in a transmitter device without limiting the operating bandwidth of the transmitter.

EP 0 416 622 describes a pre-distorter for linearization of electronic and optical signals. The circuit provides a linear output from an amplitude modulated transmission device which has inherent distortion. The distortion of the non-linear device is compensated by applying a pre distorted signal equal in magnitude and opposite in sign to the distortion introduced by the non-linear device.

EP 1 166 473 (which is prior art under Art 54(3) EPC only) describes a predistortion arrangement for use in nonlinear electro-optical arrangements. A predistortor is used having a slope adjust circuit, a phase adjust circuit and an amplitude adjust circuit.

### Summary of the Invention

The above mentioned problems with distortion and other problems are addressed by the present invention and will be understood by reading and studying the following specification.

The invention is defined by the features of independent claims 1 and 9. Further embodiments are defined in the dependent claims.

### Brief Description of the Drawings

Figure 1 is a block diagram of one embodiment of a transmitter with an electronic pre-distorter according to the teachings of the present invention.
Figure 2 is a block diagram of one embodiment of a pre-distorter according to the teachings of the present invention.
Figure 3 is a block diagram of another embodiment of a transmitter having an electronic pre-distorter according to the teachings of the present invention.
Figure 4 is a schematic of an embodiment of a pre-distorter according to the teachings of the present invention.
Figure 5 is a block diagram of an embodiment of a system having a transmitter with an electronic pre-distorter according to the teachings of the present invention.

### Description of the Preferred Embodiments

In the following detailed description of the preferred embodiments, reference is made to the accompanying drawings which form a part hereof, and in which is shown by way of illustration specific embodiments in which the invention may be practiced. It is to be understood that other embodiments may be used and logical, mechanical and electrical changes may be made without departing from the scope of the present invention. The following detailed description is, therefore, not to be taken in a limiting sense.

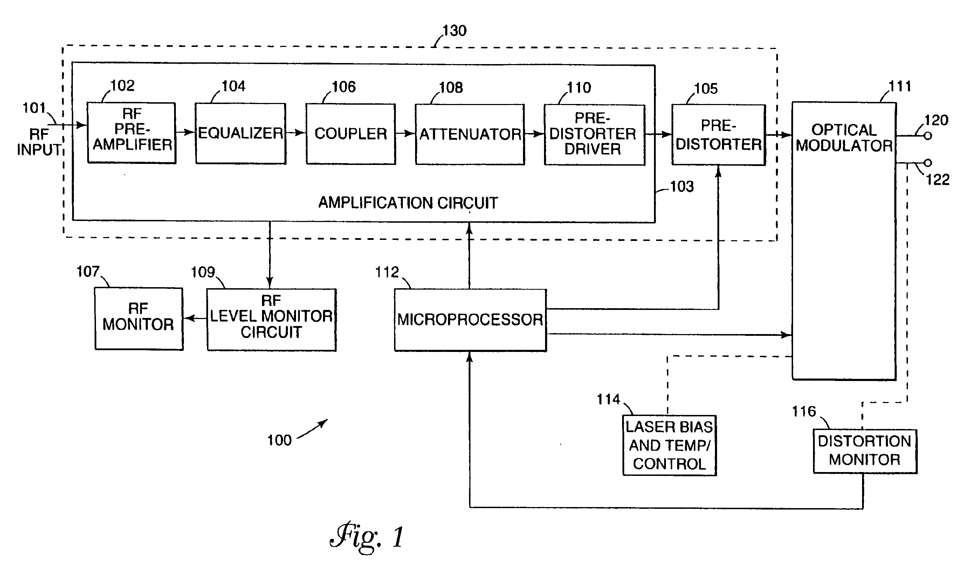

Figure 1 is a block diagram of one embodiment of a transmitter, indicated generally at 100, including a pre-distorter 105 according to the teachings of the present invention. Transmitter I 00 receives an RF input signal at input 101 and produces two optical outputs 120 and 122. In other embodiments, the transmitter may produce one or more optical outputs. The input signal is fed into an amplification circuit 103 which receives the signal, amplifies the signal and feeds the amplified signal to the pre-distorter 105. The amplified signal is received by the pre-distorter 105, combined with odd order distortions or alternately odd order and even order distortions and fed to a modulator 111. The modulator 111 receives the signal from the pre-distorter 105 and modulates the signal such that distortions generated by the modulator 111 are substantially reduced by the distortions generated by the pre-distorter 105. In this embodiment, the modulator 111 is a Mach-Zehnder optical modulator external to the transmitter. In alternate embodiments the modulator may comprise any variety of internal or external non-linear devices such as an optical modulator, an optical receiver, a directly modulated laser, an RF amplifier, a push-pull amplifier or the like.

In one embodiment, the amplification circuit 103 comprises the series combination of an RF pre-amplifier 102, an equalizer 104, an attenuator 108, a coupler 106 and a pre-distorter driver 110. The amplification circuit 103 prepares the signal for pre-distortion by the pre-distorter 105 and modulation by the modulator 111. In other embodiments, the amplification circuit may comprise alternative circuit components. In one embodiment the amplification circuit 103 and the pre-distorter 105 comprise an amplifier driver 130. In an alternate embodiment the amplifier driver comprises the pre-distorter 105. The RF pre-amplifier 102 receives the input signal at input 101 and feeds it to the equalizer 104 which equalizes the signal. The equalizer 104 then feeds the equalized signal to a coupler 106 which samples the equalized signal, provides the sampled signal to an RF level monitor circuit 109 and the equalized signal to the attenuator 108. The RF level monitor circuit 109 feeds the sampled signal to an RF monitor 107. The attenuator 108 receives the equalized signal from the coupler 106, attenuates the signal and provides the atttenuated signal to the pre-distorter driver 110. In alternate embodiments, the attenuator 108 may comprise a PIN attenuator, a variable attenuator or the like. The pre-distorter driver 110 receives the attenuated signal and amplifies the signal for input into the pre-distorter 105.

The pre-distorter 105 receives the amplifier signal and combines the signal with distortions and feeds the signal to the modulator 111. In this embodiment, the distortions are odd order distortions and in alternate embodiments, the distortions may comprise odd order, even order or a combination of odd and even order distortions. The pre-distorter 1 OS generates distortions using only non-magnetic circuit components. The distortions are approximately 180 degrees out of phase with distortions generated by modulator 111. Thus, the distortions produced by pre-distorter 105 substantially reduce the distortions in the output by modulator 111. The modulator produces at least two output signals 120 and 122.

The transmitter 100 further comprises a laser bias and temperature control device 114 and a distortion monitor 116 coupled to the modulator. 111 and a microprocessor 112 coupled between the distortion monitor 116 and the pre-distorter 105. The distortion monitor 116 measures distortion, levels in output signal 122 and feeds the distortion levels to the microprocessor 112. In one embodiment, distortion monitor 116 is constructed as shown and described in the '127 Application. Microprocessor 112 uses a control algorithm to adjust the operation of the amplification circuit 103, the pre-distorter 105 and the modulator 111 as necessary to maintain acceptable levels of distortion in the output of modulator 111. The transmitter 100 performs optical modulation using RF modulation. In this embodiment, the transmitter is a 1550 nm wavelength external modulation transmitter. In other embodiments the transmitter uses direct modulation. In addition, alternate wavelengths can be used by transmitter 100.

In alternate embodiments a servo control loop is used with a microprocessor and in other embodiments without a microprocessor.

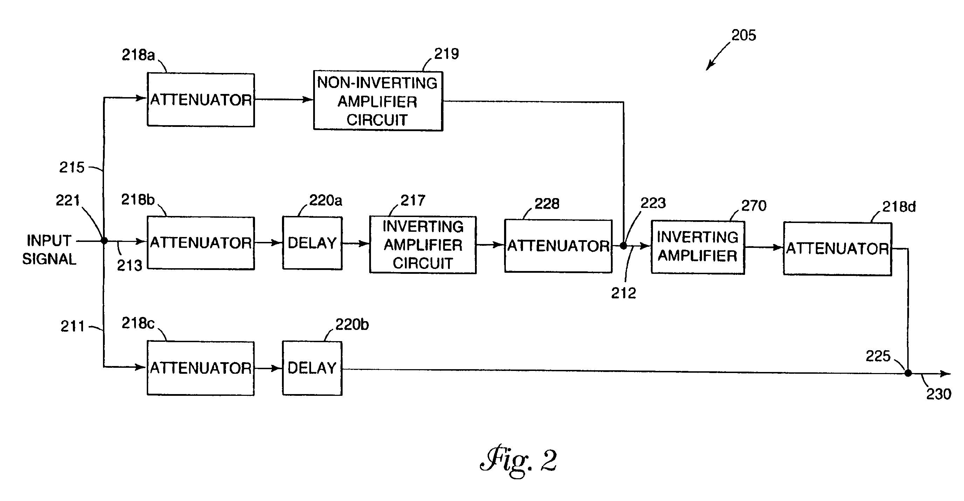

Figure 2 is a block diagram of one embodiment of a pre-distorter device, indicated generally at 205, having only non-magnetic circuit components according to the teachings of the present invention. The pre-distorter 205 receives input signals at a first node 221 and splits the input signals into a plurality of signal paths 211, 213 and 215. The plurality of signal paths comprise a main signal path 211, a secondary path 213 and a distortion path 215.

The secondary path 213 comprises an inverting amplifier circuit 217 and a delay line 220a. The secondary path provides a first signal to a second node 223. The delay line 220a adjusts the transmission of the first signal with respect to the main signal path 211 and the distortion path 215. For example the delay line 220a in this embodiment provides a time delay just long enough to make the first signal arrive 180 degrees out of phase with the second signal, provided by the distortion path 215, at the second node 223. The first signal at node 223 includes an inverted input signal with little or no distortions. The inverting amplifier circuit 217 comprises at least one inverting amplifier which is a wide dynamic range, low distortion amplifier. In other embodiments, the amplifier circuit may contain alternative circuit components to perform amplification and limit distortion.

The distortion path 215 having a non-inverting amplifier circuit 219 provides a second signal to the second node 223. The second signal at node 223 includes the non-inverted input signal and distortions. The distortions comprise odd order distortions or odd and even order distortions. The non-inverting amplifier circuit 219 comprises at least two inverting amplifiers, the amplifiers are substantially identical. In other embodiments, the non-inverting amplifier circuit 219 may contain amplifiers which are not substantially identical and/or alternative circuit components to perform amplification. In addition, the secondary path 213 and the distortion path 215 each contain an attenuator 218b, and 218a respectively. Both paths are heavily attenuated for input to their respective amplification circuits.

The second node 223 combines the first signal and the second signal and provides a resulting third signal to a joint signal path 212. In the third signal, only the distortions make it through node 223. The inverted input signal of the first signal and the non-inverted input signal of the second signal cancel as a result the third signal substantially includes only the distortions of the second signal. The joint signal path 212 comprises at least one inverting amplifier 270 and an attenuator 218d. The amplifier is a wide dynamic range, low distortion amplifier and the attenuator 218d provides light attenuation. In other embodiments, the joint signal path may comprise alternative circuit components to amplify and attenuate the third signal.

The main signal path 211 comprises a transmission delay line 220b, and an attenuator 218c. The main signal path 211 provides the input signal with substantially no distortions to the third node 225. The delay line 220b adjusts the transmission of the input signal in the main signal path 211 with respect to the secondary path 213, the distortion path 215 and the joint signal path 212. For example the delay line 220b in this embodiment provides a time delay just long enough to make the input signal of the main signal path 211 arrive 180 degrees out of phase with the third signal at node 225. The third node 225 combines the third signal and the input signal and provides a composite signal to the output 230 of the pre-distorter 205. The composite signal comprises the input signal and distortions. The distortions comprise odd order distortions or odd and even order distortions of the second signal.

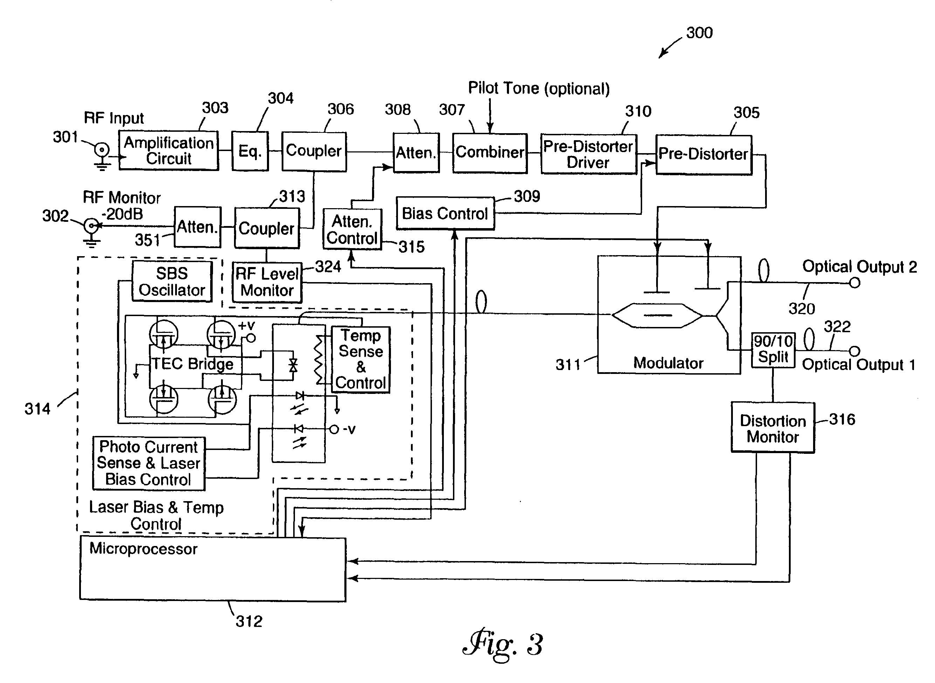

Figure 3 is a block diagram of another embodiment of a transmitter, indicated generally at 300, having a pre-distorter 305 according to the teachings of the present invention. The transmitter receives an RF input signal at RF input 301 and the signal is fed to an amplification circuit 303 where the signal is amplified and fed to an equalizer 304. The equalizer 304 receives the amplified signal, equalizes the signal and feeds the equalized signal to a first coupler 306. The first coupler 306 samples the equalized signal and feeds the sampled signal to a second coupler 313 which splits the sampled signal for transmission to an attenuator 351 and an internal RF level monitor 324. The attenuator 351 receives the split signal, attenuates the split signal and feeds the attenuated signal to an external RF monitor through RF output 302. The internal RF level monitor 324 receives the split signal and feeds the signal to a microprocessor 312 for monitoring and control.

In addition, the coupler 306 feeds the equalized signal to an attenuator 308. The attenuator 308 receives the equalized signal and attenuates the signal. In one embodiment the attenuator feeds the attenuated signal to a pre-distorter driver 310. In other embodiments the attenuator 308 feeds the attenuated signal to a combiner 307 and the signal is then fed to a pre-distorter driver 310. The combiner 307 adds a pilot tone used in distortion monitoring of the attenuated signal. The pre-distorter driver 310 receives the signal, amplifies the signal and feeds the amplified signal to a pre-distorter 305.

The pre-distorter 305 generates distortions for input to a modulator 311. In this embodiment, the modulator 311 is a Mach-Zehnder optical modulator external to the transmitter. In alternate embodiments, the modulator may comprise any variety of internal or external non-linear devices such as an optical modulator, an optical receiver, a directly modulated laser, an RF amplifier, a push-pull amplifier or the like. The distortions generated by the pre-distorter 305 are complimentary (substantially equal but 180 degrees out of phase) to distortions generated by the modulator 311. The pre-distorter 305 feeds a signal with the complimentary distortions to the modulator 311. The modulator 311 is coupled to a laser bias and temperature control device 314 which provides a light source for modulation by the modulator 311. The modulator 311 receives an RF signal and the light source and generates modulated optical outputs 320 and 322. The modulator is non-linear and produces odd-order distortions in addition to the optical outputs 320 and 322. For a large modulation index the odd-order distortions are severe. The complimentary distortions created by the pre-distorter 305 substantially reduce the distortions created by the modulator 311.

In this embodiment, a distortion monitor 316 monitors distortion levels in the output signal 322 of the modulator 311. In other embodiments, the distortion monitor monitors one or more output signals produced by the modulator 311. The distortion monitor 316 monitors the distortion levels of the signal and feeds the levels to the microprocessor 312 for control of pre-distorter 305 and modulator 311 via a bias control device 309. The microprocessor 312 also provides output signals based on the input signals from RF level monitor 324 for control of transmitter 300 to an attenuation control device 315.

In this embodiment the transmitter is a 1550 nm wavelength external modulation transmitter and in other embodiments the transmitter may be an optical transmitter, an RF transmitter, an audio frequency transmitter or the like of any of a variety of wavelengths.

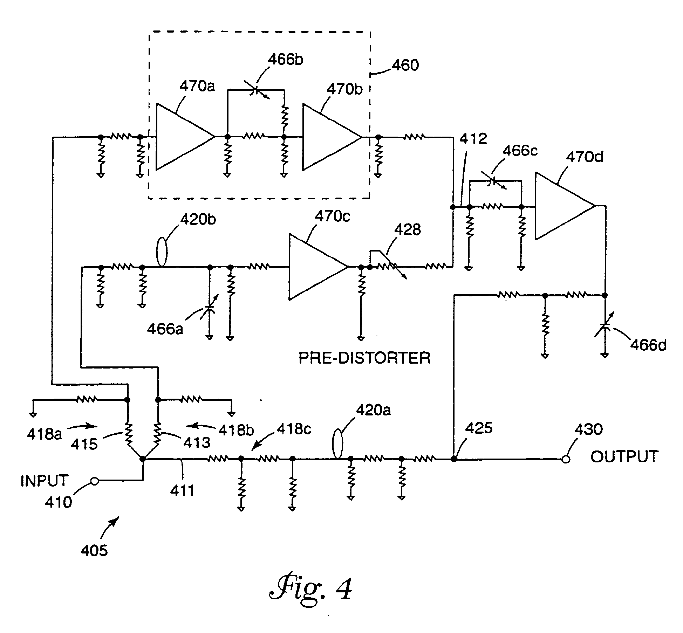

Figure 4 is a schematic of an embodiment of a pre-distorter, indicated generally at 405, according to the teachings of the present invention. The pre-distorter 405 receives an input signal along input signal path 410 and generates distortions using only resistive and capacitive circuit devices and inverting amplifiers. The distortions may be odd order or odd and even order distortions. In this embodiment, the input signal path 410 is split into a plurality of non-magnetic phase inversion circuits 413 and 415 and non-inversion circuit 411. In other embodiments, the signal path may or may not be split into 2 or more signal paths. The non-magnetic circuits include a secondary circuit 413, an odd order distortion circuit 415 and a non-inverting main signal circuit 411. Each circuit comprises only non-magnetic circuit components.

The main signal circuit 411 provides an output signal with little or no distortions. In this embodiment, the main signal circuit 411 includes at least one attenuator 418c and a transmission delay line 420a. The delay line 420a adjusts the transmission of the input signal in the main signal circuit 411 with respect to the secondary circuit 413 and the odd order circuit 415. For example, the delay line 420a in this embodiment provides a time delay just long enough to make the input signal of the main circuit 411 arrive at node 425 180- degrees out of phase with the output signal of signal path 412. The output signal of the main signal circuit is lightly attenuated by attenuator 418c and fed through the transmission delay line 420a to the output 430 of the pre-distorter 405. The output signal is substantially the input signal delayed by the delay line 420a. In other embodiments, the main signal circuit 411 may contain alternative resistive circuit components.

The secondary circuit 413 includes at least one attenuator 418b and at least one inverting amplifier 470c. The at least one inverting amplifier 470c is a wide dynamic range, low distortion amplifier. In other embodiments, the secondary circuit comprises alternative resistive circuit components. The output signal of the secondary circuit 413 comprises an inverted input signal with little or no distortions.

The odd order distortion circuit 415 includes at least one attenuator 418a and at least two inverting amplifiers 470a and 470b, the two inverting amplifiers are substantially identical. In other embodiments, the odd order distortion circuit 415 contains alternative resistive circuit components. The two inverting amplifiers 470a and 470b create a push-push circuit 460 which generates and cancels even order distortion and generates and amplifies odd order distortions. The combination of inverting amplifiers 470a and 470b becomes an odd order distortion generator.

The output of the odd order distortion circuit 415 comprises the input signal and odd order distortions. The output of the odd order distortion circuit 415 is resistively combined with the output of the secondary circuit. In this embodiment the odd order signal path 415 further comprises a variable capacitor 466b and the secondary signal path further comprises variable capacitor 466a and variable attenuator 428. The variable capacitor 466b and the variable attenuator 428 adjust the gain of the input signal.

The phase difference between the odd order distortion circuit 415 and the secondary circuit 413 is adjusted by changing the length of transmission line 420b and by trimming variable capacitor 466a to be 180 degrees for the purpose of reducing the amplitude of their amplified input signals. The resulting odd order distortion signal is fed to a joint signal path 412. The joint signal path includes a variable capacitor 466c and an inverting amplifier 470d. The output 430 of the pre-distorter 405 substantially comprises the input signal from main path 411 and amplitude adjustable odd-order distortions, that are 180 degrees out of phase with the input signal.

In an alternate embodiment, the odd order distortion circuit 415 creates odd order distortions and even order distortions by unbalancing the bias current between the two inverting amplifiers. The output of the odd order distortion circuit 415 comprises the input signal, even order distortions and odd order distortions. The output 430 of the pre-distorter 405 substantially comprises the input signal from main path 411 and amplitude adjustable odd-order and even order distortions. The even order distortions are in phase with the input signal and the odd-order distortions are 180 degrees out of phase with the input signal.

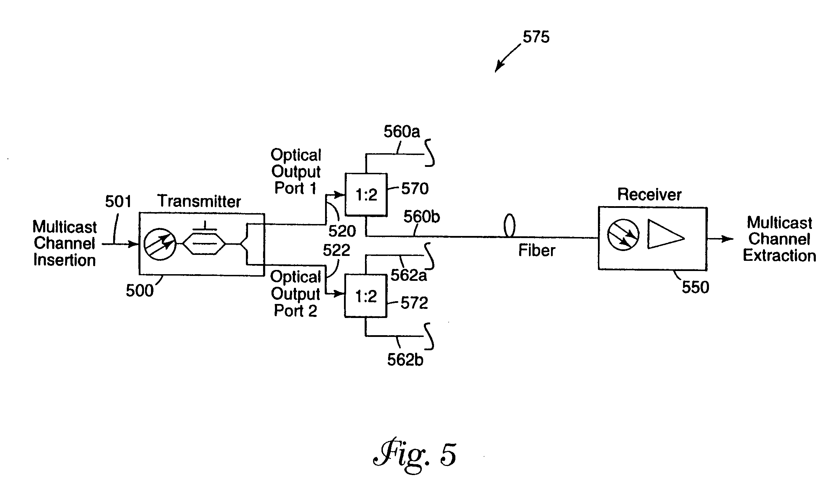

Figure 5 is a block diagram of an embodiment of a communication system 575 having a transmitter 500 with an electronic pre-distorter according to the teachings of the present invention. In this embodiment the transmitter is a 1550 nm wavelength external modulation transmitter and in other embodiments the transmitter may be an optical transmitter, an RF transmitter, an audio frequency transmitter or the like of any of a variety of wavelengths. One application of the communication system is to transport 80-112 cable television (CATV) channels between two distant locations via an optical link. Alternative applications include transmission over coaxial and copper cable links.

The transmitter 500 performs optical modulation using RF modulation techniques. The transmitter receives signals at the input 501 of the transmitter. The input signal may consist of a 80-112 Cable television multi-cast radio frequency channel insertion or any multitude of input signals for transmission by the communication system 575. The transmitter provides at least two optical output signals 520 and 522. The two optical signals 520 and 522 are fed into optical splitters 570 and 572 respectively. Each signal 520 and 522 is split into at least two transmissions lines 560a and 560b and 562a and 562b respectively. In other embodiments, the communication system may comprise a plurality of output signals with a plurality of transmission lines. In this embodiment, the transmission lines comprise optical links and in other embodiments, the transmission lines may comprise audio links, radio frequency links or the like.

Each optical splitter 570 and 572 typically feeds up to twenty-five kilometers of fiber optical lines 560a, 560b, 562a, and 566b between the transmitter 500 and the receiver 550. Each of the transmission lines are coupleable to a receiver 550 which converts the optical signal form the transmitter back into the original RF CATV format that was originally input to the transmitter at input 501.

In this embodiment the transmitter 500 and the receiver 550 are 1550 nm wavelength components. The transmitter 500 and receiver 550 may comprise alternate wavelength components in other embodiments.

### Conclusion

An amplifier driver for a non-linear device has been described. The amplifier driver comprises a pre-distorter having only non-magnetic circuit devices. The pre-distorter produces a composite signal for input to the non-linear device. The composite signal comprises first distortions which are complimentary to second distortions created by the non-linear device so as to reduce the second distortions of the non-linear device.

In addition, a transmitter has been described. The transmitter comprises an a pre-distorter having an input to receive a signal. The pre-distorter combines first distortions with the signal using only non-magnetic circuit devices. The transmitter further comprises a non-linear device coupled to the pre-distorter. The non-linear device receives the signal from the pre-distorter and adjusts the signal, such that second distortions generated by the non-linear device are substantially reduced by the first distortions of the signal from the pre-distorter before transmission.

Although specific embodiments have been illustrated and described herein, it will be appreciated by those of ordinary skill in the art that any arrangement which is calculated to achieve the same purpose may be substituted for the specific embodiment shown. For example, the embodiments of non-magnetic pre-distorters are not limited to use with a Mach Zehnder optical modulator. In other embodiments, the non-magnetic pre-distorters are used with external modulators, internal modulators, receivers such as optical receivers, directly modulated lasers, amplifiers such as an RF amplifier or a push-pull amplifier and other non-linear devices. Therefore, it is intended that this invention be limited only by the claims thereof.

## Claims

1. A pre-distorter device (105, 205, 305, 405) for use with a non-linear device (111, 311), the pre-distorter device having an input (410) to receive a signal, the pre-distorter device combining first distortions with the signal such that, in use, distortions generated by the non-linear device (111, 311) are substantially reduced by said first distortions before transmission, **characterised in that** the pre-distorter comprises only non-magnetic circuit devices, wherein said non-magnetic circuit devices comprise only resistive and capacitive circuit devices and inverting amplifiers.

2. A pre-distorter device as claimed in claim 1, the pre-distorter device further comprising:
a first node (221), wherein an input signal is split into a plurality of signal paths, wherein the plurality of signal paths comprise:
a main signal path (211) having a delay line (220b), wherein the main signal path provides a main signal;
a secondary path (213) having an inverting amplifier circuit (217, 470c), wherein the secondary path provides a first signal; and
a distortion path (215) having a non-inverting amplifier circuit (219, 460), wherein the distortion path provides a second signal;
a second node (223), wherein the second node combines the first signal and the second signal and provides a third signal to a joint signal path (212); and
a third node (225), wherein the third node combines the third signal and the main signal and provides a composite signal (230), wherein the composite signal comprises an amplified main signal with pre-distortions.

3. A transmitter (100, 300, 500), comprising:
a pre-distorter device (105, 205, 305, 405) as claimed in claim 1 or claim 2, the pre-distorter device having an input (410) to receive a signal, wherein the pre-distorter combines first distortions with the signal; and
a non-linear device (111, 311) coupled to the pre-distorter, wherein the non-linear device receives the signal from the pre-distorter and adjusts the signal, such that second distortions generated by the non-linear device are substantially reduced by the first distortions before transmission.

4. The transmitter of claim 3, wherein the non-linear device comprises an optical modulator (111, 311).

5. The transmitter of claim 3 or claim 4, wherein the non-linear device comprises a directly modulated laser which is integral to the transmitter.

6. The transmitter of any one of claims 3 to 5, wherein the non-magnetic circuit devices of the pre-distorter comprise:
a main signal circuit;
a secondary circuit coupled to an input of the main signal circuit; and
a distortion circuit coupled to the input of the main signal circuit and an output of the secondary circuit.

7. The transmitter of claim 6, wherein the distortion circuit comprises an odd order distortion circuit which generates odd order distortions.

8. The transmitter of claim 6, wherein the distortion circuit comprises an odd and even order distortion circuit which generates odd order and even order distortions.

9. A method for pre-distorting a radio frequency signal for a non-linear device, the method comprising:
receiving a radio frequency input signal;
generating a composite radio frequency signal using only non-magnetic circuit devices, wherein the composite signal comprises an input signal and first distortions, wherein the first distortions are complimentary to second distortions created by the non-linear device; and
feeding the composite signal to an input of the non-linear device,
wherein said non-magnetic circuit devices comprise only resistive and capacitive circuit devices and inverting amplifiers.

10. A communication system (575) comprising a transmitter as claimed in any one of claims 3 to 8 and further comprising:
a plurality of receivers (550); and
a plurality of transmission lines (560a, 560b, 562a, 562b), wherein each transmission line is coupled between the transmitter and one of the plurality of receivers.

## Patentansprüche

1. Vorverzerrervorrichtung (105, 205, 305, 405) zur Verwendung mit einer nicht-linearen Vorrichtung (111, 311), wobei die Vorverzerrervorrichtung einen Eingang (410) aufweist, um ein Signal zu empfangen, wobei die Vorverzerrervorrichtung erste Verzerrungen mit dem Signal kombiniert, so daß im Gebrauch Verzerrungen, die durch die nicht-lineare Vorrichtung (111, 311) erzeugt werden, durch die ersten Verzerrungen vor der Übertragung wesentlich reduziert werden, **dadurch gekennzeichnet, daß** der Vorverzerrer nur nicht-magnetische Schaltungsvorrichtungen aufweist, wobei die nicht-magnetischen Schaltungsvorrichtungen nur ohmsche und kapazitive Schaltungsvorrichtungen und invertierende Verstärker aufweisen.

2. Vorverzerrervorrichtung nach Anspruch 1, wobei die Vorverzerrervorrichtung ferner aufweist:
einen ersten Knoten (221), wobei ein Eingangssignal in mehrere Signalwege aufgespaltet wird, wobei die mehreren Signalwege aufweisen:
einen Hauptsignalweg (211), der eine Verzögerungsleitung (220b) aufweist, wobei der Hauptsignalweg ein Hauptsignal liefert;
einen Nebenweg (213), der eine invertierende Verstärkerschaltung (217, 470c) aufweist, wobei der Nebenweg ein erstes Signal liefert; und
einen Verzerrungsweg (215), der eine nicht-invertierende Verstärkerschaltung (219, 460) aufweist, wobei der Verzerrungsweg ein zweites Signal liefert;
einen zweiten Knoten (223), wobei der zweite Knoten das erste Signal und das zweite Signal kombiniert und ein drittes Signal an einen gemeinsamen Signalweg (212) liefert; und
einen dritten Knoten (225), wobei der dritte Knoten das dritte Signal und das Hauptsignal kombiniert und ein zusammengesetztes Signal (230) liefert, wobei das zusammengesetzte Signal ein verstärktes Hauptsignal mit Vorverzerrungen aufweist.

3. Sender (100, 300, 500), der aufweist:
eine Vorverzerrervorrichtung (105, 205, 305, 405) nach Anspruch 1 oder 2, wobei die Vorverzerrervorrichtung einen Eingang (410) aufweist, um ein Signal zu empfangen, wobei der Vorverzerrer erste Verzerrungen mit dem Signal kombiniert; und
eine nicht-lineare Vorrichtung (111, 311), die mit dem Vorverzerrer gekoppelt ist, wobei die nicht-lineare Vorrichtung das Signal vom Vorverzerrer empfängt und das Signal so einstellt, daß zweite Verzerrungen, die durch die nicht-lineare Vorrichtung erzeugt werden, durch die ersten Verzerrungen vor der Übertragung wesentlich reduziert werden.

4. Sender nach Anspruch 3, wobei die nicht-lineare Vorrichtung einen optischen Modulator (111, 311) aufweist.

5. Sender nach Anspruch 3 oder 4, wobei die nicht-lineare Vorrichtung einen direkt modulierten Laser aufweist, der mit dem Sender ein Teil bildet.

6. Sender nach einem der Ansprüche 3 bis 5, wobei die nicht-magnetischen Schaltungsvorrichtungen des Vorverzerrers aufweisen:
eine Hauptsignalschaltung;
eine Nebenschaltung, die mit einem Eingang der Hauptsignalschaltung gekoppelt ist; und
eine Verzerrungsschaltung, die mit dem Eingang der Hauptsignalschaltung und einem Ausgang der Nebenschaltung gekoppelt ist.

7. Sender nach Anspruch 6, wobei die Verzerrungsschaltung eine Verzerrungsschaltung ungerader Ordnung aufweist, die Verzerrungen ungerader Ordnung erzeugt.

8. Sender nach Anspruch 6, wobei die Verzerrungsschaltung eine Verzerrungsschaltung gerader und ungerader Ordnung aufweist, die Verzerrungen gerader und ungerader Ordnung erzeugt.

9. Verfahren zum Vorverzerren eines Hochfrequenzsignals für eine nicht-lineare Vorrichtung, wobei das Verfahren aufweist:
Empfangen eines Hochfrequenzeingangssignals;
Erzeugen eines zusammengesetzten Hochfrequenzsignals, wobei nur nicht-magnetische Schaltungsvorrichtungen verwendet werden, wobei das zusammengesetzte Signal ein Eingangssignal und erste Verzerrungen aufweist, wobei die ersten Verzerrungen komplementär zu den zweiten Verzerrungen sind, die durch die nicht-lineare Vorrichtung erzeugt werden; und
Einspeisen des zusammengesetzten Signals in einen Eingang der nicht-linearen Vorrichtung,
wobei die nicht-magnetischen Schaltungsvorrichtungen nur ohmsche und kapazitive Schaltungsvorrichtungen und invertierende Verstärker aufweisen.

10. Kommunikationssystem (575), das einen Sender nach einem der Ansprüche 3 bis 8 aufweist und ferner aufweist:
mehrere Empfänger (550); und
mehrere Übertragungsleitungen (560a, 560b, 562a, 562b), wobei jede Übertragungsleitung zwischen dem Sender und einem der mehreren Empfänger gekoppelt ist.

## Revendications

1. Dispositif de pré-distorsion (105, 205, 305, 405) destiné à être utilisé avec un dispositif non linéaire (111, 311), le dispositif de pré-distorsion présentant une entrée (410) destinée à recevoir un signal, le dispositif de pré-distorsion combinant des premières distorsions avec le signal de telle sorte que, en service, les distorsions produites par le dispositif non linéaire (111, 311) soient sensiblement réduites par lesdites premières distorsions avant une émission, **caractérisé en ce que** le dispositif de pré-distorsion comprend seulement des dispositifs de circuits non magnétiques, dans lequel lesdits dispositifs de circuits non magnétiques comprennent seulement des dispositifs de circuits résistifs et capacitifs et des amplificateurs inverseurs.

2. Dispositif de pré-distorsion selon la revendication 1, le dispositif de pré-distorsion comprenant en outre :
- un premier noeud (221), dans lequel un signal d'entrée est scindé en une pluralité de chemins de signaux, dans lequel la pluralité de chemins de signaux comprend :
* un chemin de signal principal (211) qui présente une ligné à retard (220b), dans lequel le chemin de signal principal fournit un signal principal
* un chemin secondaire (213) qui présente un circuit d'amplificateur inverseur (217, 470c), dans lequel le chemin secondaire fournit un premier signal ; et
* un chemin de distorsion (215) qui présente un circuit d'amplificateur non inverseur (219, 460), dans lequel le chemin de distorsion fournit un deuxième signal :
- un deuxième noeud (223), dans lequel le deuxième noeud combine le premier signal et le deuxième signal et fournit un troisième signal à un chemin de signal commun (212) ; et
- un troisième noeud (225), dans lequel le troisième noeud combine le troisième signal et le signal principal et fournit un signal composite (230), dans lequel le signal composite comprend un signal principal amplifié avec des pré-distorsions.

3. Émetteur (100, 300, 500), comprenant :
un dispositif de pré-distorsion (105, 205, 305, 405) selon la revendication 1 ou la revendication 2, le dispositif de pré-distorsion présentant une entrée (410) destinée à recevoir un signal, dans lequel le dispositif de pré-distorsion combine les premières distorsions avec le signal : et
un dispositif non linéaire (111, 311) couplé au dispositif de pré-distorsion, dans lequel le dispositif non linéaire reçoit le signal en provenance du dispositif de pré-distorsion et règle le signal, de telle sorte que les deuxièmes distorsions générées par le dispositif non linéaire soient sensiblement réduites par les premières distorsions avant une émission.

4. Émetteur selon la revendication 3, dans lequel le dispositif non linéaire comprend un modulateur optique (111, 311).

5. Émetteur selon la revendication 3 ou la revendication. 4, dans lequel le dispositif non linéaire comprend un laser modulé directement qui est d'une pièce avec l'émetteur.

6. Émetteur selon l'une quelconque des revendications 3 à 5, dans lequel les dispositifs de circuits non magnétiques du dispositif de pré-distorsion comprennent :
un circuit de signal principal ;
un circuit secondaire couplé à une entrée du circuit de signal principal ; et
un circuit de distorsion couplé à l'entrée du circuit de signal principal et à une sortie du circuit secondaire.

7. Émetteur selon la revendication 6, dans lequel le circuit de distorsion comprend un circuit de distorsion d'ordre impair qui génère des distorsions d'ordre impair.

8. émetteur selon la revendication 6, dans lequel le circuit de distorsion comprend un circuit de distorsion d'ordre impair et d'ordre pair qui génère des distorsions d'ordre impair et d'ordre pair.

9. Procédé de pré-distorsion d'un signal radiofréquence pour un dispositif non linéaire, le procédé comprenant les étapes consistant à :
recevoir un signal d'entrée radiofréquence ;
générer un signal radiofréquence composite en utilisant seulement des dispositifs de circuits non magnétiques, dans lequel le signal composite comprend un signal d'entrée et des premières distorsions, dans lequel les premières distorsions sont complémentaires de deuxièmes distorsions créées par le dispositif non linéaire ; et
envoyer le signal composite à une entrée du dispositif non linéaire,
dans lequel lesdits dispositifs de circuits non magnétiques comprennent seulement des dispositifs de circuits résistifs et capacitifs et des amplificateurs inverseur.

10. Système de communication (575) comprenant un émetteur selon l'une quelconque des revendications 3 à 8, et comprenant en outre :
une pluralité de récepteurs (550) ; et
une pluralité de lignes d'émission (560a, 560b, 562a, 562b), dans lequel chaque ligne d'émission est couplée entre l'émetteur et l'un de la pluralité des récepteurs.
